# EUROPÄISCHE PATENTSCHRIFT

(11) **EP 1 931 887 B1**
(45) Veröffentlichungstag und Bekanntmachung des Hinweises auf die Patenterteilung: **23.03.2011**
(21) Anmeldenummer: 06776138.7
(22) Anmeldetag: 07.07.2006
(51) Int. Cl.: F16C 1/18, F16H 19/00, B60N 2/66, G05G 7/10, A47C 7/46

(54) **BETÄTIGUNGSELEMENT FÜR EINE ZUGSEIL GETRIEBENE VORRICHTUNG SOWIE LORDOSENSTÜTZE**
ACTUATING ELEMENT FOR A DEVICE MOVED BY A TRACTION ROPE AND A LORDOSIS SUPPORTING ELEMENT
ELEMENT D'ACTIONNEMENT POUR UN DISPOSITIF ENTRAINE PAR CABLE TRACTEUR ET ELEMENT D'APPUI DORSOLOMBAIRE

(30) Priorität: 30.08.2005 DE 202005013621 U
(43) Veröffentlichungstag der Anmeldung: 18.06.2008
(73) Patentinhaber: Brose Fahrzeugteile GmbH & Co. KG, 96450 Coburg (DE)
(72) Erfinder: STEFFEN, Oliver, 96450 Coburg (DE); NEUMANN, Guido, 98693 Ilmenau (DE)
(74) Vertreter: FDST Patentanwälte
(86) Internationale Anmeldenummer: PCT/EP2006/006640
(87) Internationale Veröffentlichungsnummer: WO 2007/025597

(56) Entgegenhaltungen:
- EP-B1- 0 006 840
- EP-B1- 1 451 478
- GB-A- 471 910
- US-A- 2 529 447

## Beschreibung

Die Erfindung betrifft ein Betätigungselement für eine Zugseil getriebene Vorrichtung wie insbesondere eine Lordosenstütze sowie eine Lordosenstütze in einem Fahrzeugsitz.

Bei der Betätigung einer von einem Zugseil getriebenen Vorrichtung tritt häufig das Problem auf, dass mit möglichst wenig Betätigungsweg ein möglichst großer Verstellweg des Zugseils erreicht werden soll. Wird zur Betätigung des Zugseils insbesondere ein Handgriff oder ein Drehgriff verwendet, so soll für eine ergonomische Betätigung eine vorgegebene Verstellung der vom Zugseil getriebenen Vorrichtung erreicht werden, ohne dass der Anwender umgreifen muss. Diese Problematik tritt insbesondere bei einer Zugseil getriebenen Lordosenstütze auf, wie sie beispielsweise in der Rückenlehne eines Fahrzeugsitzes integriert ist. Eine derartige Lordosenstütze dient zur Unterstützung der Lendenwirbelsäule des Fahrers, wozu die Lordosenstütze eine nach vorne gegen den Rücken des Fahrers gerichtete Vorwölbung aufweist.

Zur Ausbildung der Vorwölbung umfasst eine derartige Lordosenstütze ein biegeelastisches Stützelement, an welchem ein Zugseil derart angreift, dass eine Zugverstellung zu einer Krümmung des Stützelements führt. Dabei verstärkt sich die Krümmung mit zunehmender Verstellung des Zugseils. Zur Höheneinstellung kann ein derartiges Stützelement selbst höhenverstellbar sein. Alternativ kann die Vorwölbung auch dadurch ausgebildet werden, dass hinter dem biegeelastischen Stützelement ein höhenverstellbarer Biegeschlitten angeordnet ist, der beim Vorbeifahren hinter dem Stützelement durch entsprechend geformte Metallelemente das Stützelement lokal nach vorne wölbt. In diesem Fall geschieht die Vorwölbung und eine Höhenverstellung in einem Schritt.

Zugseil getriebene Lordosenstützen in einem Fahrzeugsitz sind beispielsweise aus der DE 101 35 473 A1 oder der DE 103 22 190 B3 bekannt. Die EP 1 451 478 B1 betrifft einen wegverstärkenden Aktuator für diese Anwendung.

Aufgabe der Erfindung ist es, ein Betätigungselement für eine Zugseil getriebene Vorrichtung, insbesondere eine Lordosenstütze, anzugeben, welches bei geringem Platzbedarf des Betätigungselements mit einer möglichst geringen Betätigung eine hohe Verstellung des Zugseils ermöglicht. Weiter ist es Aufgabe der Erfindung, eine Lordosenstütze in einem Fahrzeugsitz anzugeben, die sich besonders leicht und ergonomisch bedienen lässt.

Die erstgenannte Aufgabe wird für ein Betätigungselement für eine Zugseil getriebene Vorrichtung, insbesondere eine Lordosenstütze, erfindungsgemäß dadurch gelöst, dass ein Umlenkelement in einem Gestell um eine Betätigungsachse schwenkbar gelagert ist und dass das Zugseil mit seinem festen Ende an einer Befestigungsstelle am Gestell befestigt und sein freies Ende zur Betätigung der Vorrichtung zumindest teilweise um das Umlenkelement herum geführt ist.

Die Erfindung geht dabei in einem ersten Schritt von der Überlegung aus, dass eine Führung des Zugseils um ein Umlenkelement nach Art eines umgekehrten Flaschenzuges zu einer Vervielfachung des Verstellweges ausgenutzt werden kann. Hierdurch entstehen ein zum Umlenkelement hinführender und ein vom Umlenkelement wegführender Seilabschnitt, die beide entsprechend der Bewegung des Umlenkelements verlängert oder verkürzt werden.

In einem zweiten Schritt geht die Erfindung von der Überlegung aus, dass sich das Verhältnis aus Verstellweg des Zugseils und Betätigungsweg noch weiter verbessern lässt, wenn das Umlenkelement um eine Betätigungsachse schwenkbar gelagert ist. Hierdurch wird eine auf die Betätigungsachse wirkende Drehbewegung mittels eines Hebelarmes, der Betätigungsachse und Umlenkelement miteinander verbindet, in eine entsprechend vergrößerte Verstellung des Zugseils umgesetzt.

Ein derartiges Betätigungselement bietet weiter den Vorteil, dass eine Drehbewegung von etwa 90°, die sich mit einer menschlichen Hand ohne Umgreifen erreichen lässt, in einen großen Verstellweg des Zugseiles umgesetzt wird. Damit ermöglicht ein derartiges Betätigungselement eine einfache und ergonomische Bedienung der mit einem Zugseil getriebenen Vorrichtung.

Erfindungsgemäß ist ein Seilführungselement vorgesehen und mit der Befestigungsstelle und dem Umlenkelement derart angeordnet, dass der zum Umlenkelement hinführende Seilabschnitt und der vom Umlenkelement wegführende Seilabschnitt in einer Ausgangsstellung annähernd parallel geführt sind. Das Seilführungselement ist dabei zur Führung und Fixierung des Zugseils vorgesehen, so dass sich während der Betätigung des Betätigungselements kein seitlicher Versatz des Zugseils ergibt. Insbesondere kann das Seilführungselement eine Öffnung oder eine Führungsbohrung umfassen, durch welche das Zugseil geführt ist. Auch ist es vorstellbar, das Zugseil in Gestalt eines Bowdenzuges auszubilden, wobei sich die äußere Hülle des Bowdenzugs in dem Seilführungselement abstützt.

Sind das Seilführungselement, die Befestigungsstelle und das Umlenkelement so angeordnet, dass hinführender und wegführender Seilabschnitt annähernd parallel sind, so führt eine Betätigung des Umlenkelements um eine bestimmte Distanz in etwa zu einer Verstellung des Zugseiles um die doppelte Distanz. Weiter ist eine solche Anordnung besonders Platz sparend.

In einer weiteren vorteilhaften Ausgestaltung der Erfindung ist ein zweites Umlenkelement derart vorgesehen, dass das Zugseil in einer Auslenkstellung das zweite Umlenkelement zumindest teilweise umläuft. Diese Ausgestaltung ermöglicht eine weitere Erhöhung des Stellweges des Zugseils. Dies geschieht beispielsweise dadurch, dass bei Betätigung des Betätigungselements aufgrund der Schwenkbewegung sich das Zugseil im Seilführungselement abwinkelt. Wird diesem abgewinkelten Zugseil ein zweites Umlenkelement in den Weg gestellt, so erhöht sich durch die Abweichung vom geraden Verlauf des abgewinkelten Zugseils dessen Verstellweg weiter. Das zweite Umlenkelement kann beispielsweise kreisförmig ausgebildet sein.

In einer zweckmäßigen Weiterbildung der Erfindung ist das zweite Umlenkelement um die Betätigungsachse drehbar gelagert und das erste Umlenkelement an dem zweiten Umlenkelement befestigt. Diese Ausgestaltung ist Raum und Material sparend, da das zweite Umlenkelement gleichzeitig den Hebel zwischen der Betätigungsachse und dem ersten Umlenkelement bildet.

Um die Reibung des Zugseiles zu vermindern, ist es vorteilhaft, auf dem oder jedem Umlenkelement Mittel zur Reibungsminderung anzuordnen. Dies kann beispielsweise durch einzelne Rollen oder durch eine reibungsmindernde Überfläche oder Schmiermittel geschehen. Vorteilhafterweise ist jedoch als Mittel zur Reibungsminderung eine das Umlenkelement umlaufende Rolle vorgesehen, auf welcher das Zugseil abrollt. Dabei stellt gewissermaßen der Umfang der Rolle die Lauffläche für das Zugseil dar.

Da sich - wie bereits ausgeführt - das Zugseil durch die Schwenkbewegung des ersten Umlenkelements im Seilführungselement abwinkelt, ist es zweckmäßig, dort eine abgerundete Kante auszubilden. Hierdurch wird Verschleißerscheinungen des Zugseiles durch Reibung im Seilführungselement vorgebeugt.

Zweckmäßigerweise umfasst das Betätigungselement zur Betätigung der Schwenkbewegung einen Handgriff, insbesondere ein Handrad, oder einen Antriebsmotor. Dabei ist es irrelevant, ob der Drehgriff bzw. der Antriebsmotor beispielsweise durch Kraft- oder Formschluss auf die Betätigungsachse wirkt, auf welcher beispielsweise das zweite Umlenkelement fest montiert ist, oder aber die zur Schwenkbewegung des ersten Umlenkelements notwendigen Teile direkt angreift. Beispielsweise kann hierzu die Achse selbst fest und hierauf die weiteren Teile beweglich gelagert sein.

Weiter von Vorteil ist es, wenn eine Feststellbremse zur Arretierung einer Betätigungsstellung vorgesehen ist. Mittels einer derartigen Feststellbremse wird verhindert, dass das Zugseil über eine eventuell vorhandene Rückstellkraft der zu betätigenden Vorrichtung nach Beendigung der Betätigung wieder in die ursprüngliche Stellung zurückgezogen wird. Die Feststellbremse kann durch Formschluss wie beispielsweise durch Rastelemente, oder durch Kraftschluss, wie beispielsweise durch Federelemente, realisiert sein. Besonders einfach und wirkungsvoll ist es, wenn die Feststellbremse als eine im Inneren des zweiten Umlenkelements angeordnete Schlingfeder ausgebildet ist. Eine solche Schlingfeder wirkt entweder auf das zweite Umlenkelement direkt ein oder bremst eine bewegbare Betätigungsachse, an welcher das erste Umlenkelement schwenkbar angeordnet ist.

Die zweitgenannte Aufgabe hinsichtlich einer Lordosenstütze in einem Fahrzeugsitz, die ein biegeelastisches Stützelement und ein zur Verbiegung an dem Stützelement oder an einem Biegeschlitten angreifendes Zugseil aufweist, wird erfindungsgemäß dadurch gelöst, dass das Zugseil mit dem vorbeschriebenen Betätigungselement verbunden ist.

Ein mit einer derartigen Lordosenstütze ausgestatteter Fahrzeugsitz ermöglicht eine ergonomische Bedienung des in der Rückenlehne angeordneten Stützelements. Mit einer Drehbewegung von 90° kann insbesondere bei einem Angriff des Zugseils an dem Stützelement dessen Vorwölbungsspielraum insgesamt ausgenutzt werden.

Ausführungsbeispiele der Erfindung werden anhand einer Zeichnung näher erläutert. Dabei zeigen:
- Fig. 1: in einer perspektivischen Darstellung ein erstes Betätigungselement in einer Ausgangsstellung,
- Fig. 2: in einer perspektivischen Darstellung das erste Betätigungselement in ei- ner Endstellung,
- Fig. 3: in einer perspektivischen Darstellung ein teilweise geöffnetes weiteres Betätigungselement in einer Ausgangsstellung,
- Fig. 4: in perspektivischer Darstellung das teilweise geöffnete weitere Betä- tigungselement in einer Endstellung und
- Fig. 5: in einer schematischen Darstellung eine Rückenlehne eines Fahr- zeugsitzes mit einer daran angeordneten Lordosenstütze.

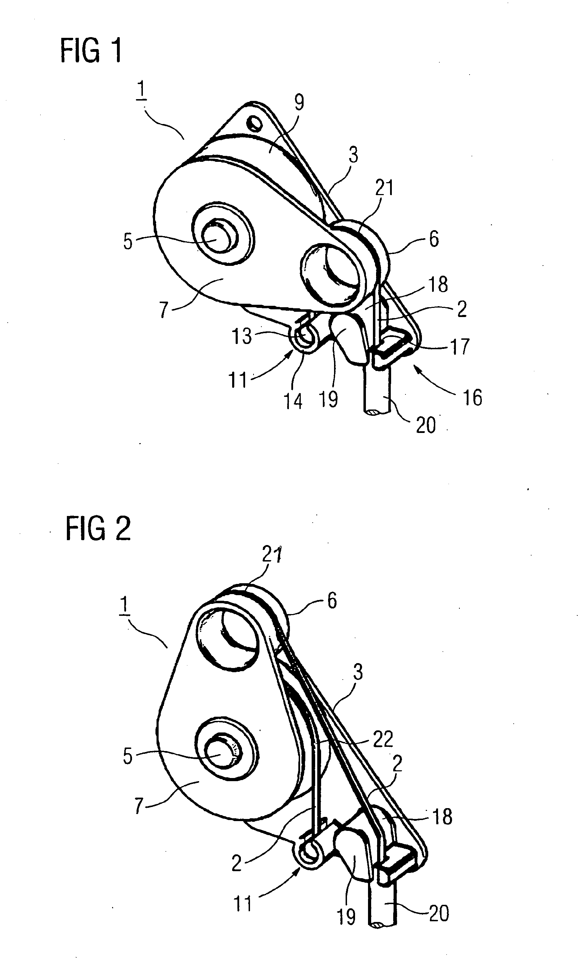

Fig. 1 zeigt in einer perspektivischen Darstellung ein erstes Betätigungselement 1 zur Betätigung eines Zugseils 2. Hierzu weist das Betätigungselement 1 ein Gestell 3 auf, an welchem, um eine Betätigungsachse 5 schwenkbar gelagert, ein erstes Umlenkelement 6 befestigt ist. Für diese schwenkbare Lagerung ist ein Kopplungsglied 7 vorgesehen, welches auf der Betätigungsachse 5 befestigt ist. Weiter weist das Gestell 3 ein zweites Umlenkelement 9 auf, in welchem das Kopplungsglied 7 geführt ist.

In der gezeigten Ausgangsstellung des Betätigungselements 1 ist ein Ende des Zugseiles 2 an einer Befestigungsstelle 11 mittels eines Lötnippels 13, der in eine Zylinderbohrung 14 eingeführt ist, fest mit dem Gestell 3 verbunden. Das Zugseil 2 umläuft dann teilweise das erste Umlenkelement 6 und ist mit seinem freien Ende anschließend zur Betätigung einer nicht dargestellten Vorrichtung über ein Seilführungselement 16 geführt. Hierzu weist das Seilführungselement 16 eine Öffnung 17 und eine abgerundete Kante 18 auf, die durch eine Erhebung 19 aus dem Gestell 3 herausgebildet ist. An der Öffnung 17 stützt sich eine Hülle 20 ab, durch die das freie Ende des Zugseils 2 nach Art eines Bowdenzuges weiter geführt ist.

Um während der Betätigung des Betätigungselements 1 ein Verrutschen des Zugseils 2 auf dem ersten Umlenkelement 6 zu vermeiden, weist dieses eine Kerbe 21 auf, in welcher das Zugseil 2 geführt ist. Zur Betätigung wird mittels eines nicht dargestellten Betätigungselements, wie beispielsweise einem Handrad, die Betätigungsachse 5 gedreht. Das Kopplungsglied 7, welches auf der Betätigungsachse 5 angeordnet ist, ist aus der in Fig. 1 dargestellten Ausgangsstellung in die in Fig. 2 dargestellte Endstellung drehbar, wodurch sich die Schwenkbewegung des ersten Umlenkelements 6 ergibt.

Durch Drehung des Kopplungsglieds 7 von der Ausgangsstellung gemäß Fig. 1 in die Endstellung gemäß Fig. 2 wird das Zugseil 2 aus der Hülle 20 zunehmend herausgezogen. Da der von der Befestigungsstelle 11 zum ersten Umlenkelement 6 hin führende Seilabschnitt und der vom Umlenkelement zum Seilführungselement 16 wegführende Seilabschnitt in der Ausgangsstellung gemäß Fig. 1 zueinander annähernd parallel verlaufen, erfährt das Zugseil 2 bei Schwenkung des ersten Umlenkelements 6 einen angenähert gedoppelten Verstellweg, da sich bei einer einfachen Bewegung des ersten Umlenkelements 6 beide Seilabschnitte entsprechend dieser Bewegung verlängern müssen.

Befindet sich das erste Umlenkelement 6 in der gemäß Fig. 2 dargestellten Endstellung so ist das Zugseil 2 in dem Seilführungselement 16 abgewinkelt. Um an dieser Stelle einen Verschleiß zu verhindern, ist die abgerundete Kante 18 vorgesehen, an der ein Teilstück des Zugseils entlang verläuft.

Das vom Seilführungselement 18 kommende Zugseil 2 umläuft in der gemäß Fig. 2 dargestellten Endstellung das Umlenkelemente 6 in der dort ausgebildeten Kerbe 21 und anschließend einen Teil des zweiten Umlenkelements 9, von wo es zu seiner Befestigungsstelle 11 gelangt. Da das zweite Umlenkelement 9 einen kreisförmigen Durchmesser aufweist, erfährt das Zugseil 2 durch das Umlaufen des Umfangsabschnitts 22 des zweiten Umlenkelements 9 eine zusätzliche Verlängerung seines Stellwegs.

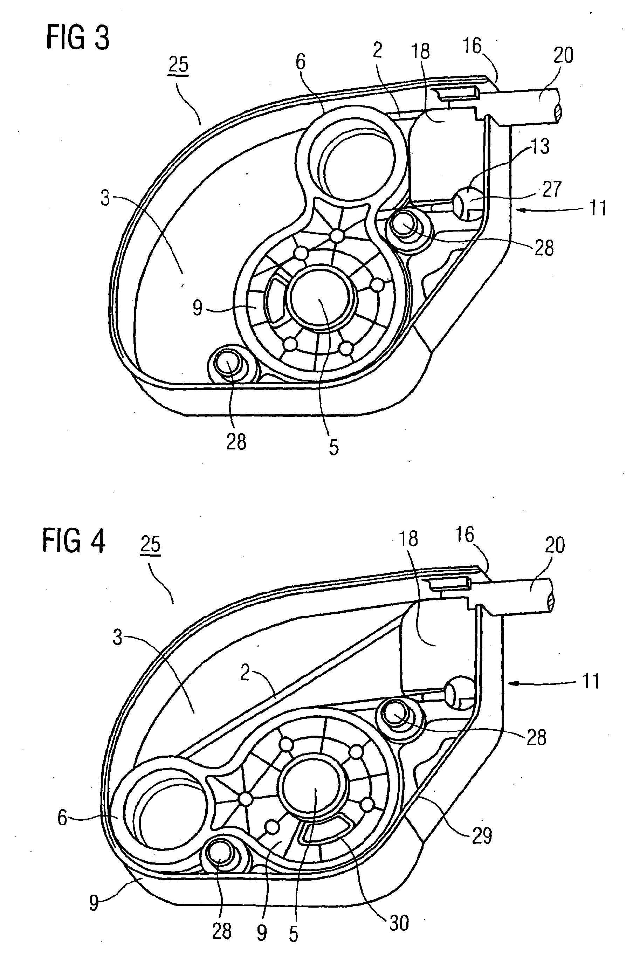

Fig. 3 zeigt in einer perspektivischen Darstellung ein teilgeöffnetes weiteres Betätigungselement 25, welches im Wesentlichen ein in Gestalt einer Halbschale ausgebildetes Gestell 3 sowie ein erstes Umlenkelement 6 und ein zweites Umlenkelement 9 umfasst. Wiederum umläuft das Zugseil 2 das erste Umlenkelement 6 und ist anschließend mittels eines Lötnippels 13 im vorliegenden Fall in einer Bohrung 27 an einer Befestigungsstelle 11 des Gestells 3 befestigt.

Das erste Umlenkelement 6 ist im Wesentlichen zylinderförmig ausgebildet, wobei das Zugseil 2 an der Zylinderwand geführt ist. Das erste Umlenkelement 6 ist starr mit dem zweiten, ebenfalls im Wesentlichen zylindrisch ausgebildeten Umlenkelement 9 verbunden. Das zweite Umlenkelement 9 ist kraftschlüssig auf einer Betätigungsachse 5 angeordnet, die - nicht sichtbar - von der Rückseite des Gestells 3 mittels eines Handrads betätigbar ist.

Zum Aufsetzen eines Deckels auf die Halbschale des Gestells 3 weist dieses zwei Steckkontakte 28 auf, die in entsprechende Ausnehmungen des nicht gezeigten Deckels beim Verschließen eingreifen.

Wird die Betätigungsachse 5 betätigt, so schwenkt das erste Umlenkelement 6 aus der in Fig. 3 dargestellten Ausgangsstellung in die in Fig. 4 dargestellte Endstellung. Das weitere Betätigungselement 25 weist am Seilführungselement 16 wiederum eine abgerundete Kante 18 auf, um einen Verschleiß des hier abgewinkelten Zugseils 2 zu verhindern.

In der Endstellung umläuft das vom Seilführungselement 16 kommende Zugseil 2 die Zylinderwand des ersten Umlenkelements 6 und anschließend einen Teil der Zylinderwand des zweiten Umlenkelements 9, um anschließend zur Befestigungsstelle 11 zu gelangen.

Im Unterschied zum ersten Betätigungselement 1 ist das zweite Umlenkelement 9 des weiteren Betätigungselements 25 direkt mit der Betätigungsachse 5 verbunden. Zur Stabilisierung des aus erstem und zweitem Umlenkelement 6 bzw. 9 insgesamt gebildeten Hebels ist eine teilweise am Umfang des zweiten Umlenkelements 9 verlaufende Führungswand 29 vorgesehen. Weiter ist im Inneren des zweiten Umlenkelements 9 eine Schlingfeder 30 angeordnet, die - am Gestell 3 befestigt - auf die Innenseite des zweiten Umlenkelements 9 drückt und insofern eine Betätigungsstellung arretiert.

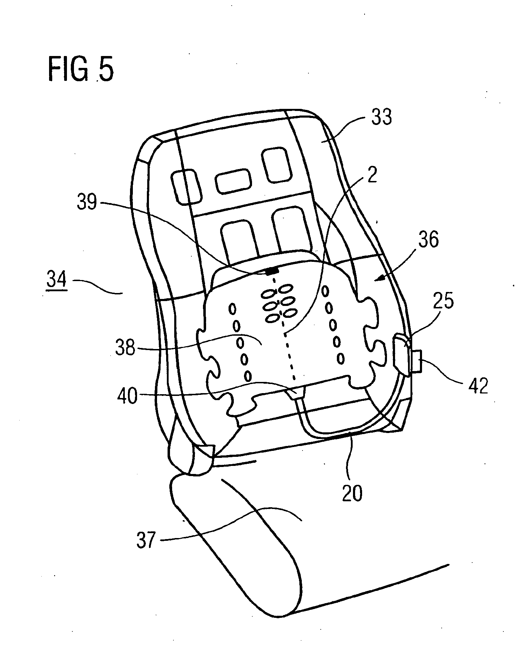

Fig. 5 zeigt schematisch das Gestell einer Rückenlehne 33 eines Fahrzeugsitzes 34, wobei in die Rückenlehne 33 eine Lordosenstütze 36 integriert ist. Die Sitzfläche 37 ist lediglich angedeutet. Die Lordosenstütze 36 umfasst ein biegeelastisches Stützelement 38, welches mittels einer Vorwölbung zur Unterstützung der Lendenwirbelsäule eines Fahrers geeignet ist.

Zum Erreichen der Vorwölbung des Stützelements 38 greift an diesem ein Zugseil 2 an, welches am oberen Ende des Stützelements 38 am Befestigungspunkt 39 fest mit diesem verbunden ist. Am unteren Ende des Stützelements 38 befindet sich ein Widerlager 40, an dem sich nach Art eines Bowdenzugs die Hülle 20 des Zugseils 2 abstützt. Die Hülle 20 und damit das darin geführte Zugseil 2 sind entlang dem Gestell der Rückenlehne 33 zu einem entsprechend Fig. 3 und 4 ausgebildeten Betätigungselement 25 geführt. Zur Betätigung des Betätigungselements 25 weist dieses ein Handrad 42 auf.

Wird das Handrad 42 betätigt, so wird über den in den Fig. 3 und 4 dargestellten Mechanismus des Betätigungselements 25 das Zugseil 2 durch die Hülle 20 gezogen, wodurch sich der Abstand zwischen dem Widerlager 40 und dem Befestigungspunkt 39 verkürzt. Entsprechend wölbt sich das Stützelement 38 durch geeignete Vorformung unterstützt nach vorne. Der Hub der Wölbung kann mittels des Handrads 42 bequem innerhalb einer Drehung von 90° eingestellt werden.

### Bezugszeichenliste

- 1: Betätigungselement
- 2: Zugseil
- 3: Gestell
- 5: Betätigungsachse
- 6: erstes Umlenkelement
- 7: Kopplungsglied
- 9: zweites Umlenkelement
- 11: Befestigungsstelle
- 13: Lötnippel
- 14: Zylinderbohrung
- 16: Seilführungselement
- 17: Öffnung
- 18: abgerundete Kante
- 19: Erhebung
- 20: Hülle
- 21: Kerbe
- 22: Umfangsabschnitt
- 25: Betätigungselement
- 27: Bohrung
- 28: Steckkontakt
- 29: Führungswand
- 30: Schlingfeder
- 33: Rückenlehne
- 34: Fahrzeugsitz
- 36: Lordosenstütze
- 37: Sitzfläche
- 38: Stützelement
- 39: Befestigungspunkt
- 40: Widerlager
- 42: Handrad

## Patentansprüche

1. Betätigungselement (1, 25) für eine Zugseil getriebene Vorrichtung, insbesondere eine Lordosenstütze (36), wobei ein Umlenkelement (6) in einem Gestell (3) um eine Betätigungsachse (5) schwenkbar gelagert ist, wobei das Zugseil (2) mit seinem festen Ende an einer Befestigungsstelle (11) am Gestell (3) befestigt und sein freies Ende zur Betätigung der Vorrichtung zumindest teilweise um das Umlenkelement (6) herum geführt ist, und wobei ein Seilführungselement (16) vorgesehen ist und mit der Befestigungsstelle (11) und dem Umlenkelement (6) derart angeordnet ist, dass der zum Umlenkelement (6) hinführende Seilabschnitt und der vom Umlenkelement (6) wegführende Seilabschnitt in einer Ausgangsstellung annähernd parallel geführt sind.

2. Betätigungselement (1,25) nach Anspruch 1,
**dadurch gekennzeichnet,**
**dass** ein zweites Umlenkelement (9) derart vorgesehen ist, dass das Zugseil (2) in einer Auslenkstellung das zweite Umlenkelement (9) zumindest teilweise umläuft.

3. Betätigungselement (1,25) nach Anspruch 2,
**dadurch gekennzeichnet,**
**dass** das zweite Umlenkelement (9) um die Betätigungsachse (5) drehbar gelagert ist, und das erste Umlenkelement (6) an dem zweiten Umlenkelement (9) befestigt ist.

4. Betätigungselement (1,25) nach einem der vorhergehenden Ansprüche,
**dadurch gekennzeichnet,**
**dass** auf dem oder jedem Umlenkelement (6,9) Mittel zur Reibungsminderung angeordnet sind.

5. Betätigungselement (1,25) nach Anspruch 4,
**dadurch gekennzeichnet,**
**dass** als Mittel zur Reibungsminderung eine das oder jedes Umlenkelement (6,9) umlaufende Rolle vorgesehen ist, auf welcher das Zugseil (2) abrollt.

6. Betätigungselement (1,25) nach einem der Ansprüche 1 bis 5,
**dadurch gekennzeichnet,**
**dass** das Seilführungselement (16) eine abgerundete Kante (18) umfasst.

7. Betätigungselement (1,25) nach einem der vorhergehenden Ansprüche,
**dadurch gekennzeichnet,**
**dass** zur Betätigung der Schwenkbewegung ein Handgriff, insbesondere ein Handrad (42), oder ein Antriebsmotor umfasst ist.

8. Betätigungselement (1,25) nach einem der vorhergehenden Ansprüche,
**dadurch gekennzeichnet,**
**dass** eine Feststellbremse zur Arretierung einer Betätigungsstellung vorgesehen ist.

9. Betätigungselement (1,25) nach Anspruch 8,
**dadurch gekennzeichnet,**
**dass** die Feststellbremse als eine im Inneren des zweiten Umlenkelements (9) angeordnete Schlingfeder (30) ausgebildet ist.

10. Lordosenstütze (36) in einem Fahrzeugsitz (34) mit einem biegeelastischen Stützelement (38) und einem zur Verbiegung an dem Stützelement (38) oder an einem Biegeschlitten angreifenden Zugseil (2),
**dadurch gekennzeichnet,**
**dass** das Zugseil (2) mit einem Betätigungselement (1,25) gemäß einem der Ansprüche 1 bis 9 verbunden ist.

## Claims

1. Actuating element (1, 25) for a device driven by a traction rope, in particular a lordosis support (36), wherein a deflecting element (6) is mounted on a frame (3) in such a way that it is pivotable about an actuating shaft (5), wherein the fixed end of the traction rope (2) is fastened to the frame (3) at a fastening point (11) and its free end is guided at least partially around the deflecting element (6) for actuating the device, and wherein a rope guiding element (16) is provided and is arranged with the fastening point (11) and the deflecting element (6) in such a way that the rope portion leading toward the deflecting element (6) and the rope portion leading away from the deflecting element (6) are guided approximately parallel in a starting position.

2. Actuating element (1, 25) according to Claim 1, **characterized in that** a second deflecting element (9) is provided in such a way that the traction rope (2) at least partially orbits the second deflecting element (9) in a deflected position.

3. Actuating element (1, 25) according to Claim 2, **characterized in that** the second deflecting element (9) is mounted so as to be able to rotate about the actuating shaft (5) and the first deflecting element (6) is fastened to the second deflecting element (9).

4. Actuating element (1, 25) according to any one of the preceding claims, **characterized in that** means for reducing friction are arranged on the or each deflecting element (6, 9).

5. Actuating element (1, 25) according to Claim 4, **characterized in that** a roll which orbits the or each deflecting element (6, 9) and on which the traction rope (2) rolls is provided as the means for reducing friction.

6. Actuating element (1, 25) according to any one of Claims 1 to 5, **characterized in that** the rope guiding element (16) comprises a rounded edge (18).

7. Actuating element (1, 25) according to any one of the preceding claims, **characterized in that** a handle, in particular a handwheel (42), or a drive motor is comprised for actuating the pivoting movement.

8. Actuating element (1, 25) according to any one of the preceding claims, **characterized in that** a fixing brake is provided for locking an actuating position.

9. Actuating element (1, 25) according to Claim 8, **characterized in that** the fixing brake is configured as a wrap spring (30) arranged inside the second deflecting element (9).

10. Lordosis support (36) in a vehicle seat (34) comprising a flexible support element (38) and a traction rope (2) acting on the support element (38) or on a flexural carriage for the purposes of bending, **characterized in that** the traction rope (2) is connected to an actuating element (1, 25) according to any one of Claims 1 to 9.

## Revendications

1. Elément d'actionnement (1, 25) pour un dispositif entraîné par un câble de traction, notamment un appui dorsolombaire ou appui-lordose (36), dans lequel un élément de renvoi (6) est monté dans une structure (3) de manière à pouvoir pivoter autour d'un axe d'actionnement (5),
dans lequel le câble de traction (2) est fixé, par son extrémité fixe, en un point de fixation (11) de la structure (3), et son extrémité libre destinée à l'actionnement du dispositif est menée et guidée au moins en partie autour de l'élément de renvoi (6), et
dans lequel il est prévu un élément de guidage de câble (16), qui est agencé de façon telle avec le point de fixation (11) et l'élément de renvoi (6), que le tronçon de câble menant à l'élément de renvoi (6) et le tronçon de câble s'éloignant de l'élément de renvoi (6) soient, dans une position initiale, guidés de manière approximativement parallèle l'un à l'autre.

2. Elément d'actionnement (1, 25) selon la revendication 1,
**caractérisé en ce qu'**un deuxième élément de renvoi (9) est prévu de manière telle que le câble de traction (2), dans une position de déviation, s'enroule au moins partiellement autour du deuxième élément de renvoi (9).

3. Elément d'actionnement (1, 25) selon la revendication 2,
**caractérisé en ce que** le deuxième élément de renvoi (9) est monté rotatif autour de l'axe d'actionnement (5), et le premier élément de renvoi (6) est fixé sur le deuxième élément de renvoi (9).

4. Elément d'actionnement (1, 25) selon l'une des revendications précédentes,
**caractérisé en ce que** sur l'élément ou les éléments de renvoi (6, 9) sont agencés des moyens pour réduire le frottement.

5. Elément d'actionnement (1, 25) selon la revendication 4,
**caractérisé en ce qu'**en guise de moyen pour réduire le frottement, il est prévu, en révolution autour de l'élément ou de chaque élément de renvoi (6, 9), un galet sur lequel roule le câble de traction (2).

6. Elément d'actionnement (1, 25) selon l'une des revendications 1 à 5,
**caractérisé en ce que** l'élément de guidage de câble (16) présente une arête (18) arrondie.

7. Elément d'actionnement (1, 25) selon l'une des revendications précédentes,
**caractérisé en ce que** pour l'actionnement du mouvement de pivotement, il est prévu une poignée, notamment un bouton de manoeuvre à la main (42), ou bien un moteur d'entraînement.

8. Elément d'actionnement (1, 25) selon l'une des revendications précédentes,
**caractérisé en ce qu'**il est prévu un frein d'immobilisation pour bloquer une position d'actionnement.

9. Elément d'actionnement (1, 25) selon la revendication 8,
**caractérisé en ce que** le frein d'immobilisation est réalisé sous la forme d'un ressort de retenue enroulé (30), agencé à l'intérieur du deuxième élément de renvoi (9).

10. Appui dorsolombaire ou appui-lordose (36) dans un siège de véhicule (34) comprenant un élément d'appui (38) élastique en flexion et un câble de traction (2) pour produire une flexion et agissant sur l'élément d'appui (38) ou sur un chariot de flexion,
**caractérisé en ce que** le câble de traction (2) est relié à un élément d'actionnement (1, 25) selon l'une des revendications 1 à 9.
